Europäisches Patentamt

European Patent Office

Office européen des brevets

(19)

(11) Veröffentlichungsnummer: **0 374 382**
**A1**

(12) **EUROPÄISCHE PATENTANMELDUNG**

(21) Anmeldenummer: **89117532.5**

(22) Anmeldetag: **22.09.89**

(51) Int. Cl.⁵: **F02K 9/97, F02K 9/64**

(30) Priorität: **21.12.88 DE 3843005**

(43) Veröffentlichungstag der Anmeldung:
**27.06.90 Patentblatt 90/26**

(84) Benannte Vertragsstaaten:
**DE FR GB IT**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Schmidt, Bernhard**
**Almenrauschstrasse 13**
**D-8012 Ottobrunn(DE)**
Erfinder: **Kretschmer, Joachim**
**Johann-Biersack 17**
**D-8133 Feldafing(DE)**
Erfinder: **Kramer, Peter, Dr.**
**Adlerstrasse 10**
**D-7997 Immenstaad(DE)**

(54) **Kühlung von Hyperschallantriebskomponenten.**

(57) Verfahren zum Kühlen von heißgasbeaufschlagten Wänden von Strömungskanälen in teilweise oder ausschließlich mit Wasserstoff betriebenen, luftatmenden Hyperschallantrieben, insbesondere von Luftführungskanälen, Düsen und Staustrahlbrennkammern in Kombinationsantrieben für Raumtransporter und hyperschallschnelle Passagier- und Transportflugzeuge. Der Wasserstoff-Massenstrom wird vollständig oder größtenteils durch die Wandstrukturen der Strömungskanäle geleitet und anschließend in wenigstens einer der Brennkammern des Hyperschallantriebes zur Schuberzeugung verbrannt. Die Wandstruktur besteht heißgasseitig aus dünnwandigen, aneinandergrenzenden und miteinander verbundenen Röhrchen (4), welche über die Länge ihres jeweiligen Kühlbereiches konstante Querschnitte aufweisen, und daß sie auf der heißgasabgewandten Seite aus einem im wesentlichen mechanisch belasteten, ein- oder mehrteiligen Stützelement (6) besteht.

FIG. 1

## Kühlung von Hyperschallantriebskomponenten

Die Erfindung betrifft ein Verfahren zum Kühlen von heißgasbeaufschlagten Wänden von Strömungskanälen in teilweise oder ausschließlich mit Wasserstoff betriebenen, luftatmenden Hyperschallantrieben, gemäß dem Oberbegriff des Patentanspruches 1, sowie eine Wandstruktur zur Durchführung des Verfahrens.

Hyperschallantriebe für zukünftige Raumtransporter oder Passagier- und Transportflugzeuge umfassen in der Regel mehrere Triebwerksarten, wobei für den Betrieb in der Atmosphäre luftatmende Triebwerke, wie Turboluftstrahl- und Staustrahltriebwerke, bevorzugt werden. Bei diesen braucht der für die Verbrennung benötigte Oxidator, hier Sauerstoff, nicht im Fluggerät mitgeführt zu werden, sondern kann der Umgebungsluft entnommen werden. Fluggeschwindigkeiten im Hyperschallbereich führen aufgrund des Staueffektes zu sehr hohen Luft- bzw. Gastemperaturen in Einläufen, Brennkammern und Düsen, d.h. in Strömungskanälen aller Art. Bereits in Lufteinläufen werden Temperaturen bis zu 2000 K erwartet, in Brennkammern ist von Temperaturen bis ca. 3000 K auszugehen. Daraus ergeben sich zwangsläufig erhebliche Kühlprobleme.

Bei Turbo- und Staustrahltriebwerken nach dem Stand der Technik wird für die wesentlichen Kühlfunktionen praktisch ausschließlich Luft verwendet. Beispielsweise mit Bypassluft oder mit dem Verdichter abgezapfter Luft werden Teile des Triebwerksgehäuses, Leit- und Laufschaufeln etc. gekühlt.

Falls flüssiger Treibstoff, wie z.B. Kerosin, verwendet wird, so ist es üblich, auch diesen für Kühlungszwecke zu benutzen, z.B. zur Schmierölkühlung bei Turbotriebwerken.

Bei Flüssigkeitsraketentriebwerken, insbesondere bei deren Brennkammern, ist es bekannt, die Wandstruktur regenerativ zu kühlen. Dabei wird üblicherweise eine Teilmenge einer Treibstoffkomponente, z.B. $H_2$, durch eine Vielzahl von aneinandergrenzenden Kanälen in der Wand der Brennkammer gepumpt und im erhitzten, verdampften Zustand in die Brennkammer zur Verbrennung und Schuberzeugung eingefördert. Siehe hierzu beispielsweise die DE-PS 29 49 522. Bei dem in dieser Schrift behandelten Triebwerk werden der vordere Teil der Schubdüse sowie die Brennkammer regenerativ gekühlt, der hintere Teil der Schubdüse weist ein offenes Kühlsystem mit konvektiver Kühlung (Strömung in der Düsenwand) und Filmkühlung auf. Eine besonders leichte Wandstruktur mit guter Kühlwirkung ergibt sich, wenn diese nach der DE-PS 24 62 131 aus im Querschnitt rechteckigen, miteinander verschweißten Kühlröhrchen besteht. Der Querschnitt der Röhrchen ist über die Länge konstant, die Anpassung an unterschiedliche Durchmesser erfolgt über die Wahl des örtlichen Spiralwinkels.

Wasserstoff ist bekanntermaßen ein sehr wirkungsvolles Kühlmittel, wobei die $H_2$-Kühltechnik in zahlreichen Varianten von den Raketentriebwerken her bekannt ist.

Der Fachmann ist sich jedoch darüber im klaren, daß die Betriebsverhältnisse und Anforderungen, beispielsweise bei einem Staustrahltriebwerk für ein Hyperschallflugzeug, sich wesentlich von denen bei einem Raketentriebwerk für Raumflug unterscheiden:

- Das Staustrahltriebwerk bzw. der Hyperschallantrieb ist für eine viel größere Lebensdauer auszulegen, welche z.B. mehr als das Tausendfache der Lebensdauer eines Raktentriebwerkes betragen kann.

- Beim Staustrahltriebwerk sind die Dimensionen und damit die zu kühlenden Flächen erheblich größer, beispielsweise kann der Brennkammerdurchmesser mehr als 2m betragen. Aus der Größe ergeben sich auch höhere Anforderungen an die mechanische Festigkeit.

- aufgrund des geringeren Treibstoffverbrauches pro Zeiteinheit steht beim Staustrahltriebwerk ein deutlich geringerer Massenstrom an Kühlmittel (Treibstoff) zur Verfügung, welcher - gegenüber einem großen Raketentriebwerk - z.B. nur etwa 10 % beträgt. Daraus ergibt sich der Zwang, das Kühlmittel wesentlich besser auszunützen, z.B. durch eine erheblich größere Temperaturerhöhung. Dabei sind Kühlmitteltemperaturen im Bereich von 1000 K und darüber denkbar.

- Die hohen Kühlmitteltemperaturen führen u.U. zu einer erheblichen Aggressivität gegenüber angrenzenden Bauteilen (Korrosion, Versprödung etc.).

- Die geometrischen Verhältnisse sind beim Staustrahltriebwerk i.a. komplexer als beim - in der Regel - rotationssymmetrischen Raketentriebwerk. Es gibt z.B. Übergänge von 2D- auf 3D-Strukturen, asymmetrische Querschnitte und ähnliches.

- Die Wärmestromdichten in den Strömungskanalwänden betragen bei Hyperschallantrieben nur einige Prozent gegenüber denjenigen in Raketentriebwerken.

Die Aufgabe der Erfindung besteht nun darin, ein Verfahren sowie geeignete Wandstrukturen zum Kühlen von heißgasbeaufschlagten Wänden von Strömungskanälen in teilweise oder ausschließlich mit Wasserstoff betriebenen, luftatmenden Hyperschallantrieben aufzuzeigen. Die Anwendung soll insbesondere bei Staustrahlbrennkammern, Düsen und Luftführungskanälen, wie Einläufen, Bypassleitungen, Grenzschichtkanälen etc., erfolgen.

Diese Aufgabe wird durch die im Hauptanspruch sowie in den Nebenansprüchen 3, 5 und 6 gekennzeichneten Merkmale gelöst.

Es wird somit erstmalig vorgeschlagen, das Prinzip der regenerativen $H_2$-Kühlung mit anschließender Verbrennung bei luftatmender Verbrennung bei luftatmenden Hyperschallantrieben anzuwenden, wobei der zur Verfügung stehende Wasserstoff-Massenstrom vollständig oder größtenteils zur Kühlung herangezogen wird. Die zu kühlenden Wandstrukturen gemäß Nebenanspruch 3 bestehen heißgasseitig aus aneinandergrenzenden, dünnwandigen und miteinander verbundenen Röhrchen, welche vom Wasserstoff durchströmt und dabei konvektiv gekühlt werden. Der Röhrchenverbund nimmt so mit im wesentlichen die thermische Belastung auf. Auf der heißgasabgewandten Seite ist ein ein- oder mehrteiliges Stützelement angeordnet, z.B. in Form eines Mantels, einer Wickelbandage oder mehrerer Ringe, welches der Wandstruktur die erforderliche mechanische Festigkeit verleiht, insbesondere Formstabilität und Beständigkeit gegenüber Heißgasdrücken (z.B. Brennkammerdruck). Die Röhrchen weisen über die Lange ihres jeweiligen Kühlbereiches, d.h. vom Kühlmitteleintritt bis zum Kühlmittelaustritt, konstante Querschnitte auf, was deren Herstellung und Verarbeitung wesentlich erleichtert. Durchmesseränderungen der Wandstruktur sind dabei - in bekannter Weise - durch spiralige Anordnung der Röhrchen und Änderung des Spiralwinkels möglich.

Im Nebenanspruch 5 wird als zweite konstruktive Lösung eine Wandstruktur vorgeschlagen, welche im wesentlichen aus miteinander gasdicht verbundenen Röhrchen besteht. Dieser Strukturaufbau ist besonders leicht, jedoch mechanisch nicht so stabil wie die erste Variante.

Mit dem Nebenanspruch 6 wird eine dritte Lösung vorgeschlagen, welche als Integralbauweise bezeichnet werden kann. Die Wandstruktur besteht aus einem einseitig von den Heißgasen beaufschlagten Grundkörper mit eingeformten Kühlkanalrillen sowie aus einem überwiegend mechanisch belasteten, die Kühlkanalrillen abdeckenden Mantel. Eine solche Struktur ist - in der Regel - einfacher in der Herstellung und unproblematischer bezüglich ihrer Dichtheit gegenüber den Heißgasen, jedoch schwerer als die beiden vorstehend genannten Lösungen.

Die Unteransprüche 2, 4 und 7 enthalten bevorzugte Ausgestaltungen des Verfahrens bzw. der Wandstruktur.

Die Erfindung wird nachfolgend anhand der in der Zeichnung dargestellten Ausführungsbeispiele noch näher erläutert. Dabei zeigen in vereinfachter Darstellung:

Fig. 1 einen Querschnitt durch eine Wandstruktur mit Stützelement,

Fig. 2 einen Querschnitt durch eine Wandstruktur ohne Stützelement,

Fig. 3 einen Querschnitt durch eine Wandstruktur in Integralbauweise.

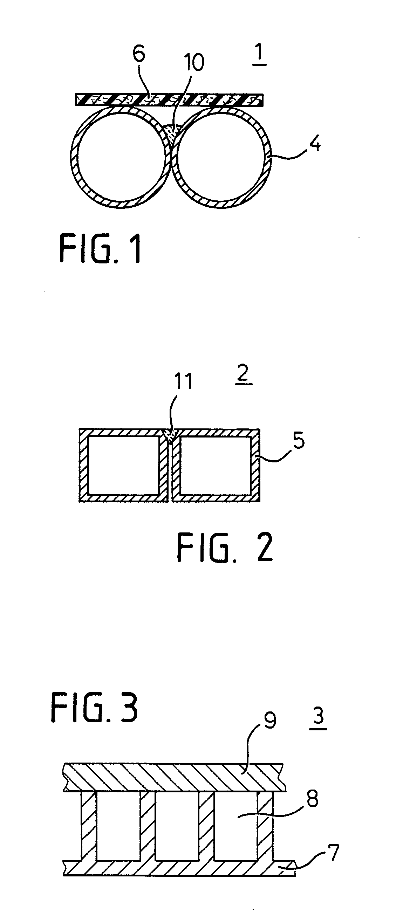

Bei den Darstellungen der Fig. 1 bis 3 wird davon ausgegangen, daß die Kühlkanäle, d.h. die Röhrchen bzw. die Kühlkanalrillen, in Längsrichtung oder in Längs- und Umfangsrichtung des umhüllten Strömungskanales verlaufen. In jeder Figur liegt die heißgasbeaufschlagte Seite der Wandstruktur unten, die nicht-heißgasbeaufschlagte Seite oben. Die nur in kleinen Teilquerschnitten wiedergegebenen Wandstrukturen sind der Einfachheit halber mit geraden Außen- und Innenkonturen bzw. mit gerader innerer Hüllkontur (Fig. 1, Heißgasseite) dargestellt. Entsprechend der Erfindung tatsächlich ausgeführte Wandstrukturen werden meist gekrümmte oder aus gekrümmten und geraden Abschnitten zusammengesetzte Querschnittskonturen aufweisen, wobei die Abmessungen der Kühlkanalquerschnitte erheblich kleiner sein werden als beispielsweise die Krümmungsradien der Wandstruktur. Im Hinblick auf die im vorausgehenden Text verwendete Bezeichnung "heißgasbeaufschlagt" sei darauf hingewiesen, daß bei Hyperschallgeschwindigkeit nicht nur in Brennkammern und Düsen sondern praktisch in allen mit der Zellenumströmung verbundenen Strömungskanälen aufgrund von Stau- und Reibungseffekten sehr hohe Temperaturen auftreten. So sind beispielsweise in den Triebwerkseinläufen maximale Temperaturen von ca. 2000 K zu erwarten.

Fig. 1 zeigt eine Wandstruktur 1, bei welcher die Kühlfunktion einerseits und die Stützfunktion andererseits auf zusammenwirkende Bauelemente aufgeteilt sind. Die dünnwandigen, metallischen Röhrchen 4, welche von Wasserstoff durchströmt werden, bilden die eigentliche Kühlstruktur.

Sie sind auf der heißgasabgewandten Seite über je eine Schweißnaht 10 gasdicht miteinander verbunden. Anstelle des Verschweißens könnte man die Röhrchen 4 auch durch Löten verbinden. Als Röhrchenwerkstoffe sind besonders hochtemperaturbeständige Nickellegierungen geeignet. Die Röhrchenwanddicke ist primär so bemessen, daß sie ausreicht, den $H_2$-Druck aufzunehmen. Belastungen infolge des Strömungskanalinnendruckes, infolge von Querbeschleunigungen etc. werden hauptsächlich vom Stützelement 6 aufgenommen. Aufgrund der geringen thermischen Belastung ist es möglich, das Stützelement 6 in Leichtbauweise auszuführen, d.h. beispielsweise aus Leichtmetall oder Faserverbundwerkstoff. Besonders geeignet erscheint kohlefaservestärkter Kunststoff. Das Stützelement 6 kann mit den Röhrchen 4 kraftschlüssig verbunden sein, z.B. durch Verkleben oder durch Vorspannung. Ebenso sind formschlüssige Verbindungen möglich. Das Stützelement 6 selbst kann ein- oder mehrteilig ausgeführt sein. Als mehrteilige Ausführungen sind beispielsweise axial hintereinandergesetzte Ringe oder axial geteilte, miteinander verschraubte Schalensegmente vorstellbar. Dank der mechanischen Entlastung durch das Stützelement 6 können Röhrchen 4 mit einfachem, kreisrundem Querschnitt verwendet werden.

Zusammenfassend ist zu sagen, daß die Wandstruktur 1 nach Fig. 1 besonders formstabil und beständig gegen hohe Kanaldrücke ist.

Eine besonders einfache und leichte Bauweise zeigt Fig. 2. Die Wandstruktur 2 besteht nur aus metallischen, an der heißgasabgewandten Seite miteinander gasdicht verschweißten Röhrchen 5 mit rechteckigem Querschnitt. Als Röhrchenwerkstoffe werden hochwarmfeste Nickellegierungen bevorzugt. Anstelle der Schweißnaht 11 kann die Verbindung der Röhrchen auch über Lötfugen erfolgen.

Weiterhin sind Schweißverbindungen auf der Außen- und Innenseite (Heißgasseite) möglich. Bei stärkerer Krümmung der Wandstruktur 2 kann es sinnvoll sein, Röhrchen mit zur Heißgasseite hin verjüngtem, beispielsweise trapezförmigem Querschnitt zu verwenden.

Im Vergleich zur Ausführung nach Fig. 1 ist die Wandstruktur 2 nur für geringere Kühlmittel- und Kanaldrücke geeignet, da sie mechanisch nicht so belastbar ist.

Fig. 3 schließlich zeigt eine sogenannte Integralbauweise in metallischer Ausführung. Die Wandstruktur 3 besteht heißgasseitig aus einem einstückigen bzw. aus wenigen Teilen zusammengefügten, gut wärmeleitenden Grundkörper 7, in welchen Kühlkanalrillen eingearbeitet sind, beispielsweise durch Drehen, Fräsen oer Erodieren. Als mechanisches Stützelement deckt ein Mantel 9 die Kühlkanalrillen 8 auf der heißgasabgewandten Seite ab. Dieser relativ dickwandige Mantel 9 ist mit dem Grundkörper 7 gasdicht verbunden, sein Werkstoff ist primär auf mechanische Festigkeit hin ausgewählt. Beispielsweise ist es günstig, für den Grundkörper 7 Kupfer, für den Mantel 9 Nickel zu verwenden. Eine besonders innige, metallische Verbindung ergibt sich, wenn der Mantel 9 auf den Grundkörper 7 aufgalvanisiert, d.h. in voller Dicke galvanisch erzeugt wird. Zu diesem Zweck sind die Kühlkanalrillen 8 mit einem Füllstoff einzuebnen, welcher nach dem Galvanisieren wieder entfernt wird, z.B. durch Ausschmelzen oder Auswaschen.

Die Bauweise nach Fig. 3 bietet die Vorteile einer hohen Formgenauigkeit, einer hohen Sicherheit gegen Leckage und Durchbrennen sowie einer hohen mechanischen Festigkeit. Allerdings führt sie in der Regel zu einem höheren Strukturgewicht als die Bauweisen nach Fig. 1 und 2.

Abschließend sei noch darauf hingewiesen, daß besonderes lange Strömungskanalkomponenten, wie beispielsweise Triebwerkseinläufe, vorzugsweise aus mehreren, axial hintereinander angeordneten Strukturelementen zusammengesetzt werden. Die einzelnen Wandstrukturelemente sind strömungsmechanisch parallelgeschaltet, wobei der Wasserstoff über Sammelleitungen zu- und abgeführt wird. Auf diese Weise ergeben sich für das Kühlmittel (H2) kurze Strömungswege in den Wandstrukturen, d.h eine mäßige Erhitzung, und ein relativ kleiner Strömungswiderstand (großer effektiver Kühlkanalquerschnitt, kleine Kühlkanallänge). Es ist sinnvoll, innerhalb jedes Wandstrukturelementes, d.h.innerhalb jedes Kühlbereiches, konstante Kühlröhrchen- bzw. Kühlkanalquerschnitte zu verwenden. Von Element zu Element können die Kühlkanalquerschnitte dann variiert und den örtlichen Erfordernissen (Temperatur, Wärmestromdichte etc.) optimal angepaßt werden.

## Ansprüche

1. Verfahren zum Kühlen von heißgasbeaufschlagten Wänden von Strömungskanälen in teilweise oder ausschließlich mit Wasserstoff betriebenen, luftatmenden Hyperschallantrieben, insbesondere von Luftführungskanälen, Düsen und Staustrahlbrennkammern in Kombinationsantrieben für Raumtransporter und hyperschallschnelle Passagier- und Transportflugzeuge, **dadurch gekennzeichnet,** daß der Wasserstoff-Massenstrom vollständig oder größtenteils durch die Wandstrukturen (1, 2, 3) der Strömungskanäle geleitet und anschließend in wenigstens einer der Brennkammern des Hyperschallantriebes zur Schuberzeugung verbrannt wird.

2. Verfahren nach Anspruch 1, **dadurch gekennzeichnet,** daß der H2-Massenstrom in mehrere, strömungsmechanisch parallelgeschaltete Teilströme aufgespalten wird, welche durch die Wandstrukturen (1,2 3) bestimmter Komponenten (z.B. Brennkammer, Düse) geleitet werden bzw. welche die Wandstrukturen (1, 2, 3) bestimmter Komponenten (z.B. Lufteinlauf) abschnittsweise durchströmen.

3. Wandstruktur zur Durchführung des Verfahrens nach Anspruch 1 oder 2, **dadurch gekennzeichnet,** daß sie heißgasseitig aus dünnwandigen, aneinandergrenzenden und miteinander verbundenen Röhrchen (4) besteht, welche über die Länge ihres jeweiligen Kühlbereiches konstante Querschnitte aufweisen, und daß sie auf der heißgasabgewandten Seite aus einem im wesentlichen mechanisch belasteten, ein- oder mehrteiligen Stützelement (6) besteht (Fig. 1).

4. Wandstrukur nach Anspruch 3, **dadurch gekennzeichnet,** daß die Röhrchen (4) aus einem hochwarmfesten, wasserstoffresistenten Werkstoff bestehen, und daß das Stützelement (6) aus einem hochfesten Leichtbauwerkstoff, z.B. aus Faserverbundwerkstoff, besteht.

5. Wandstruktur zur Durchführung des Verfahrens nach Anspruch 1 oder 2, **dadurch gekennzeichnet,** daß sie im wesentlichen aus dünnwandigen, aneinandergrenzenden, gasdicht miteinander verbundenen Röhrchen (5) besteht, welche über die Lange ihres jeweiligen Kühlbereiches konstante Querschnitte aufweisen (Fig. 2).

6. Wandstruktur zur Durchführung des Verfahrens nach Anspruch 1 oder 2, **dadurch gekennzeichnet,** daß sie aus einem heißgasbeaufschlagten, gut wärmeleitenden Grundkörper (7) mit in diesen eingeformten Kühlkanalrillen (8) sowie aus einem fest mit dem Grundkörper (7) verbundenen, die Kühlkanalrillen (8) auf der heißgasabgewandten Seite abdeckenden, überwiegend mechanisch belasteten Mantel (9) besteht (Integralbauweise, Fig. 3).

7. Wandstruktur nach Anspruch 6, **dadurch gekennzeichnet,** daß der Mantel (9) aus einer oder mehreren, galvanoplastisch erzeugten Schichten besteht.

FIG. 1

FIG. 2

FIG. 3

10615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-247388 (ERNO RAUMFAHRTTECHNIK GMBH.) * Zusammenfassung; Figur * | 1, 3, 5 | F02K9/97 F02K9/64 |
| Y | * Spalte 4, Zeilen 38 - 56 * | 2 | |
| Y | | 6 | |
| Y | FR-A-2599429 (MESSERSCHMITT-BÖLKOW-BLOHM GMBH) * Seite 1, Zeile 1 - Seite 3, Zeile 23 * * Figur 1 * | 1, 3, 5 | |
| Y | US-A-3188801 (PROSSER) * Spalte 2, Zeilen 29 - 72; Figuren 1-3 * | 2 | |
| Y | DE-B-1197689 (BÖLKOW GMBH) * Spalte 3, Zeilen 17 - 31; Figuren 1-3 * | 6 | |
| A | DE-B-1264160 (BÖLKOW GMBH) * das ganze Dokument * | 1-7 | |
| A,D | DE-B-2462131 (MESSERSCHMITT-BÖLKOW-BLOHM GMBH) * das ganze Dokument * | 4 | |
| A | CH-A-328859 (ARMSTRONG SIDDELEY MOTORSLTD.) * Seite 1, Zeilen 8 - 22; Figuren 1-3 * | 2 | RECHERCHIERTE SACHGEBIETE (Int. Cl.5) |
| A | CH-A-324836 (THE DE HAVILLAND ENGINE CO. LTD.) * Seite 2, Zeilen 1 - 10 * * Seite 3, Zeilen 20 - 29; Figuren * | 1, 3-5, 7 | F02K F02C |
| A | US-A-2122521 (R.H.GODDARD) | | |

Der vorliegende Recherchenbericht wurde für alle Patentansprüche erstellt

| Recherchenort | Abschlußdatum der Recherche | Prüfer |
|---|---|---|
| DEN HAAG | 27 MAERZ 1990 | CRIADO Y JIMENEZ, F. |